# EUROPEAN PATENT APPLICATION

(11) **EP 4 273 643 A1**
(43) Date of publication of application: **08.11.2023**
(21) Application number: 23170632.6
(22) Date of filing: 28.04.2023
(51) Int. Cl.: G05B 19/4065

(54) **MONITORING SYSTEM OF MACHINERY IN INDUSTRIAL PLANTS, PARTICULARLY FOR PREDICTIVE MAINTENANCE OF MACHINERY**

(30) Priority: 02.05.2022 IT 202200008846
(71) Applicant: Pinpoint Srl, 41030 Bastiglia (MO) (IT)
(72) Inventor: LUPPI, Nicolo', 41030 Bastiglia (MO) (IT)
(74) Representative: Grana, Daniele

(57) **Abstract**

The monitoring system (1) of machinery in industrial plants, particularly for predictive maintenance of machinery, comprises a data collection and processing unit (2), a plurality of vibration and/or temperature sensors (3) installed at the point where the components (4) to be monitored of machinery (5) of at least one industrial plant (6) are located, a control unit (8) comprising a graphical user interface (9) comprising at least one graphical representation of a general map (10) of the plant (6), divided into a plurality of zones (11), each comprising at least one piece of machinery (5) to be monitored, at least one graphical representation of a sub-map (12) of said general map (10), relating to said zone (11), in turn divided into a plurality of zones (11), and a plurality of graphical representations of machinery (13) to be monitored, wherein each of said graphical representations of the machinery (13) comprises at least one detailed signaling graphical element (14); and wherein each of said zones (11) of the general map (10) and of the sub-map (12) comprises at least one general signaling graphical element (15) configured to be displayed in different colors according to the colors of each detailed signaling graphical element (14).

## Description

### Technical Field

The present invention relates to a monitoring system of machinery in industrial plants, particularly for predictive maintenance of machinery.

### Background Art

The need for periodic maintenance of machinery in industrial plants to avoid breakdown and unwanted interruptions in production is well known.

In particular, maintenance is frequently carried out following a periodic schedule, depending on the specific type of plant and machinery involved, and requires the presence on site of qualified personnel with the purpose of checking the state of machinery and of replacing the components subject to wear and tear.

In such a case, therefore, the surveys are collected periodically by qualified personnel in charge, who physically visits the plant with one or more handheld instruments, and who then prepares an analysis report on the state of the machinery.

However, this type of maintenance necessarily involves the regular on-site employment of qualified personnel, regardless of the actual state of the machinery, leading to very high fixed maintenance costs.

In addition, the data collected relate only to the instant at which the surveys were taken, performing predictive maintenance of a periodic and routine type and thus not ruling out the possibility of unexpected malfunctions and failures. To overcome the aforementioned drawbacks, the use of monitoring systems of machinery capable of enabling predictive maintenance is well known. Specifically, such systems enable real-time monitoring of plants by means of a plurality of sensors arranged where one or more specific machinery components are located.

Typically, such sensors are adapted to sense vibration and/or temperature. In particular, the analysis of vibration data makes it possible to identify mechanical and/or electrical problems and to monitor the progressive degradation of a component before wear and tear or a failure can harm the proper operation of the machinery and/or cause production stoppages or damage to the machinery itself.

According to one possible embodiment of such monitoring systems, the sensors continuously send data to an on-site computer which, through standardized software with pre-determined alarm thresholds, sends alerts to an operator in the event of any abnormal vibration.

According to this mode, however, the monitoring system merely sends alarm signals and monitoring is carried out without the assistance of a qualified analyst who can make an accurate diagnosis of the problem encountered and, therefore, the relevant severity of the problem and possible solution.

Finally, there are more advanced monitoring systems wherein the sensors are connected to a processing unit and, using a special software program, the collected data are processed so that they can be monitored by qualified and certified analysts.

Specifically, in this case, in addition to enabling automatic notification of alarms related to failures or abnormal situations, the software carries out processing and presentation of the collected data to experienced and certified analysts, thus enabling the translation of the collected and processed data into forecast information.

This enables accurate and timely check of the health status of each individual piece of machinery in the plant.

With continuous control, it is therefore possible to take full advantage of each machine's life cycle, thus reducing downtime and unplanned production stoppages.

Even such monitoring systems of known type, however, are susceptible to refinements, particularly aimed at simplifying and speeding up the verification and interpretation operations of data by experienced and certified analysts.

### Description of the Invention

The main aim of the present invention is to devise a monitoring system of machinery in industrial plants, particularly for predictive machinery maintenance, which allows for a quick and simplified health status check of all machinery in one or more plants, even in the case of very complex plants and/or multiple plants distributed at multiple sites.

Another object of the present invention is to devise a monitoring system of machinery in industrial plants, particularly for predictive maintenance of machinery, which allows the aforementioned drawbacks of the prior art to be overcome within the framework of a simple, rational, easy and effective to use as well as affordable solution.

The aforementioned objects are achieved by this monitoring system of machinery in industrial plants according to claim 1.

### Brief Description of the Drawings

Other characteristics and advantages of the present invention will become more apparent from the description of a preferred, but not exclusive, embodiment of a monitoring system of machinery in industrial plants, particularly for predictive maintenance of machinery, illustrated by way of an indicative, yet non-limiting example, in the accompanying tables of drawings in which:
Figure 1 shows a general diagram of the monitoring system according to the invention;
Figures 2, 3, 4 and 5 show a possible embodiment of the graphical user interface of the monitoring system according to the invention.

### Embodiments of the Invention

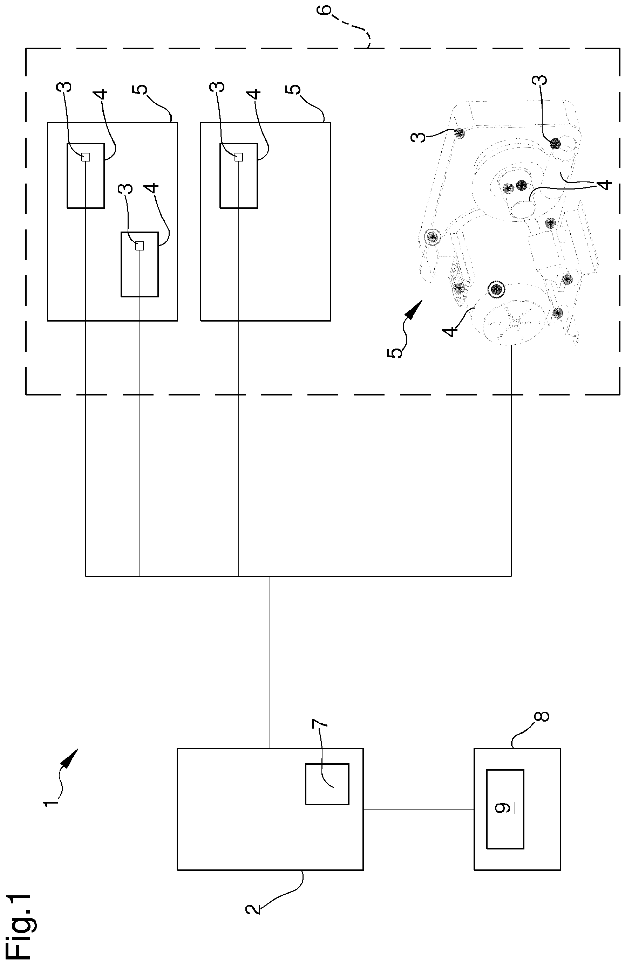

With particular reference to Figure 1, reference numeral 1 globally denotes a monitoring system of machinery in industrial plants, particularly for predictive maintenance of machinery.

The monitoring system 1 according to the invention is designed for the acquisition of data on industrial machines in order to schedule maintenance work, to prevent unexpected failures which cause production stoppages and to have continuous control over time of the status of machinery.

The monitoring system 1 according to the invention can also be used to monitor the conditions of machinery in general, e.g. for the purpose of monitoring the energy consumption thereof.

In addition, the monitoring system 1 can be used for other services, such as thermography, oil analysis, air analysis and anti-flooding.

The monitoring system 1 comprises at least one data collection and processing unit 2.

Specifically, the data collection and processing unit 2 may comprise at least one local computer processor in the proximity of a monitored industrial plant, or at least one remote computer processor.

Different embodiments cannot however be ruled out wherein, e.g., the data collection and processing unit is implemented by means of a distributed processing system.

In addition, the monitoring system 1 comprises a plurality of vibration and/or temperature sensors 3 installed where the components 4 to be monitored of machinery 5 of at least one industrial plant 6 are located.

The monitored components 4 may consist, e.g., of motors, gearboxes, bearings, gears or other components 4 of the machinery 5 provided with moving parts.

The sensors 3 are operationally connected to the data collection and processing unit 2 and are configured to collect vibration and/or temperature data relating to the components 4 and to send the data collected to the data collection and processing unit 2.

Specifically, the data collection and processing unit 2 comprises a storage unit 7 of the collected data and is configured to process the collected data for the detection of abnormal vibration and/or temperature data.

In particular, the analysis of vibration data makes it possible to identify problems of a mechanical and/or electrical nature and to monitor the progressive degradation of a component before wear and tear or a defect can harm the proper operation of the machinery and/or cause production downtime or damage to the machinery itself.

In this regard, the data collection and processing unit 2 comprises a software program configured to process the data collected and to detect abnormal vibration and/or temperature data.

The sensors 3 used are selected from at least one of the following types: vibration sensor, temperature sensor, acceleration sensor, speed sensor, displacement sensor, absorption sensor to detect electrical issues, filter clogging sensor, flow rate/pressure sensor.

According to a preferred embodiment, the sensors 3 collect data in a synchronous manner with each other.

Conveniently, according to one possible embodiment, the monitoring system 1 comprises at least one wireless communication station operationally connected to the data collection and processing unit 2, and the sensors 3 comprise a data transmission unit of the wireless type (WiFi, 4G) operationally connected to the wireless communication station.

In addition, the monitoring system 1 comprises at least one control unit 8 operationally connected to the data collection and processing unit 2, comprising a graphical user interface 9 for the real-time display and monitoring of the collected and processed data.

The control unit 8 consists of a computer processor or of a similar device and the graphical user interface 9 is implemented using software installed on the control unit 8.

Advantageously, the graphical user interface 9 of the monitoring system 1 according to the invention allows for a quick and simplified health status check of all machinery 5 in one or more plants 6 even in the case of very complex plants and/or multiple plants distributed at multiple sites.

Specifically, the graphical user interface 9 comprises at least one graphical representation of a general map 10 of the at least one plant, divided into a plurality of zones 11 each comprising at least one piece of machinery 5 to be monitored.

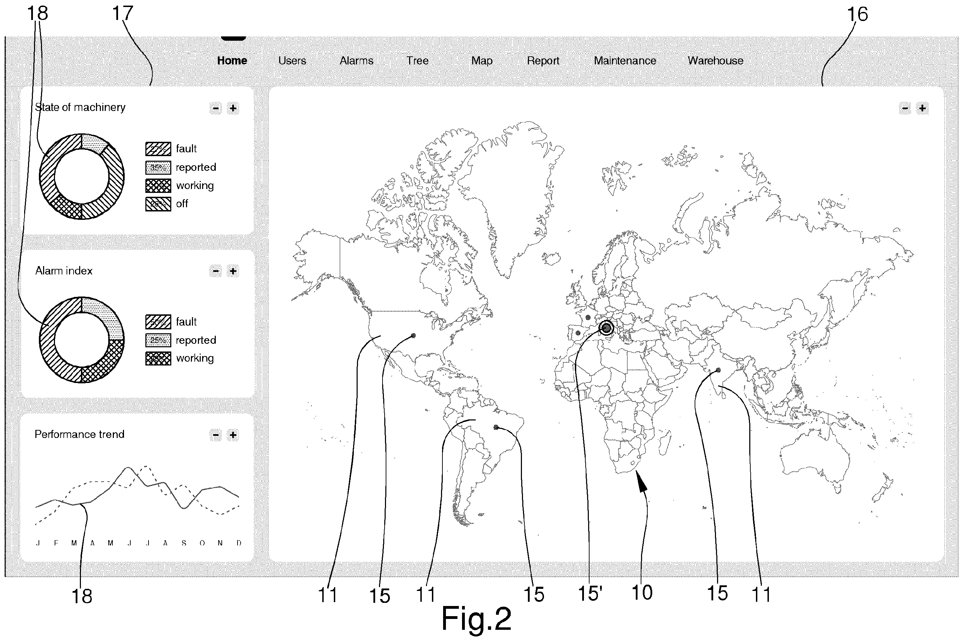

Figure 2 shows for illustration purposes only a possible general map 10, consisting, in this case, of a world map in which the different zones 11 are nations or otherwise areas on the territory of which there is at least one plant 6.

The use of graphical representations of general maps of different type cannot, of course, be ruled out as there are no constraints on the choice of the general map to be used. For example, the general map may represent the layout of a specific site where there are one or more plants.

If at least one of the zones 11 of the general map 10 comprises a plurality of machinery 5 to be monitored, then the graphical user interface 9 comprises at least one graphical representation of a sub-map 12 of the general map 11 relating to that specific zone 11, wherein the sub-map 12 is in turn divided into a plurality of zones 11, each comprising at least one piece of machinery 5 to be monitored.

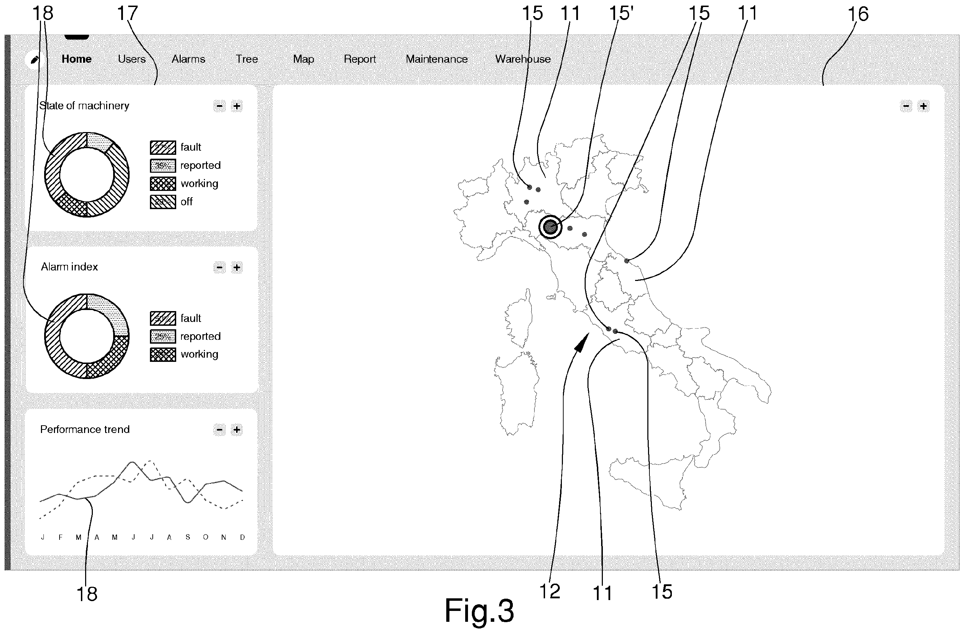

Figure 3 shows, again purely as an example, a possible sub-map 12, consisting in this case of a map of Italy, wherein the different zones 11 are areas on the territory of which there is at least one plant 6.

Again, the use of graphical representations of sub-maps of different type cannot, of course, be ruled out, there being no constraints on the choice of which sub-map to use. For example, with reference to the use of a general map representing the layout of a specific site where there are one or more plants, the graphical user interface 9 may include several sub-maps relating to each of the plants, wherein each sub-map represents the specific layout of the respective plant and/or environment housing the plant.

In addition, if at least one of the zones 11 of the sub-map 12 comprises a plurality of machinery 5 to be monitored, then the graphical user interface 9 comprises at least one graphical representation of an additional sub-map 12 relating to that zone, wherein this additional sub-map 12 is in turn divided into a plurality of zones 11, each comprising at least one piece of machinery to be monitored.

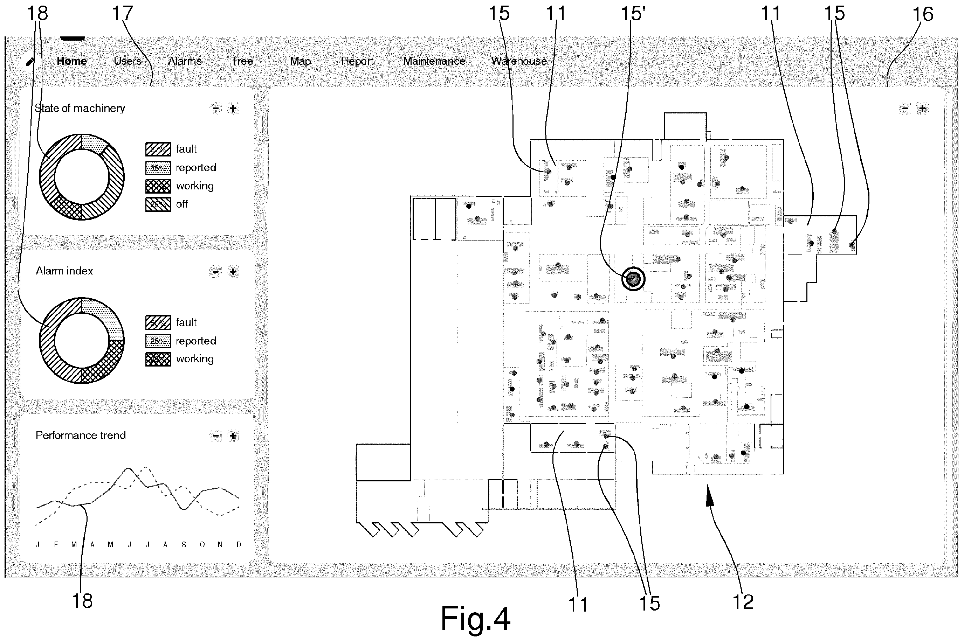

Figure 4 shows, again purely as an example, a possible additional sub-map 12, consisting in this case of the floor plan of a site comprising a plant 6 to be monitored, wherein the different zones 11 consist of different rooms or workplaces comprising at least one piece of machinery 5 to be monitored.

Therefore, the graphical user interface 9 may comprise a plurality of sub-maps 12 such that all sites and rooms can be displayed in detail starting from a general map 10.

Finally, the graphical user interface 9 comprises a plurality of graphical representations of the machinery 13 to be monitored.

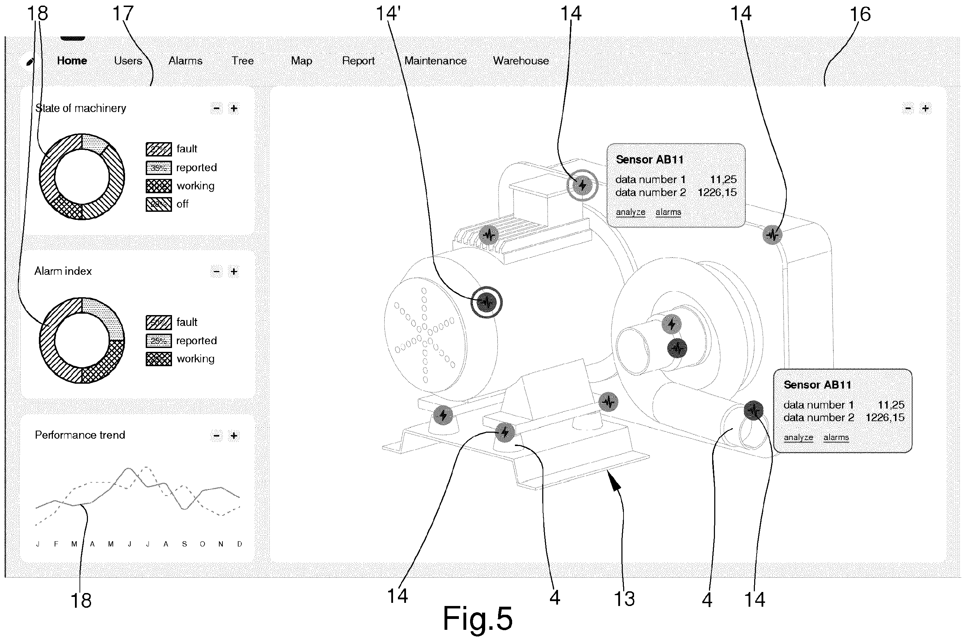

An example of a graphical representation of a piece of machinery 13 is shown in Figure 5. Again, there are no constraints with respect to the type of graphical representation.

Advantageously, for each of the graphical representations of the machinery 13, the graphical user interface 9 comprises at least one detailed signaling graphical element 14 arranged where at least one component 4 to be monitored is located, configured to be displayed in different colors corresponding to the different states of the component 4.

In addition, for each of the zones 11 of the general map 10 and, if any, for each of the sub-maps 12, the graphical user interface 9 comprises at least one general signaling graphical element 15 configured to be displayed in different colors depending on the colors of each detailed signaling graphical element 14 of each component 4 of machinery 5 present within each specific zone 11.

Examples of different general signaling graphical elements 15 can be seen in the general map 10 and in the sub-maps 12 shown in Figures 2, 3 and 4. Specifically, the graphical user interface 9 is configured to perform at least the steps described below.

First of all, the graphical user interface 9 is configured to display the graphical representation of the general map 10, wherein the color of the general signaling graphical element 15 of each zone 11 is selected according to the status of each of the components 4 of the machinery 5 present within that specific zone 11.

If one of the general signaling graphical elements 15 of a zone 11 of the general map 10 is selected (by a user), and if that zone 11 comprises a plurality of machinery 5 to be monitored, then the graphical user interface 9 is configured to display a graphical representation of a sub-map 12 relating to that specific zone 11. Similarly to the general map 10, within such a sub-map 12 the color of the general signaling graphical element 15 of each zone 11 is selected depending on the status of each of the components 4 of the machinery 5 present within that specific zone 11.

Similarly, if one of the general signaling graphical elements 15 of a zone 11 of such a sub-map 12 is selected, and if such a zone 11 comprises a plurality of machinery 5 to be monitored, then the graphical user interface 9 is configured to display a graphical representation of an additional sub-map 12 relating to such a specific zone 11. Within such additional sub-map 12, the color of the general signaling graphical element 15 of each zone 11 is selected depending on the status of each of the components 4 of the machinery 5 present within that specific zone.

Additional sub-maps 12 can therefore be displayed if additional zones 11 comprising a plurality of machinery 5 to be monitored are selected.

Examples of selections made are graphically shown in Figures 2, 3 and 4, where the selected general signaling graphical elements are indicated by reference numeral 15'.

Finally, if one of the general signaling graphical elements 15 of a zone 11 of the general map 10 or of the sub-map 12 is selected, and if that zone 11 comprises only one piece of machinery 5 to be monitored, then the graphical user interface 9 is configured to display a graphical representation of the machinery 13, wherein the color of the detailed signaling graphical element 14 of each component 4 to be monitored is selected depending on the status of the component 4.

An example of the selection made is graphically shown in Figure 5, where the selected detailed signaling graphical element is indicated by reference numeral 14'.

According to a preferred embodiment, the different states of each monitored component 4 correspond to respective alert levels.

In such a case, the different colors of each detailed signaling graphical element 14 of a component 4 correspond to relevant alert levels.

Possible states of each component 4 are: fault, reported, working, off.

Possible corresponding colors of each detailed signaling graphical element 14 are: red (corresponding to fault state), yellow (corresponding to reported state), green (corresponding to working state), purple (corresponding to off state). The definition of different states of components 4 and of the respective colors of the detailed signaling graphical elements 14 cannot however be ruled out.

The different states of the components 4 are processed by the data collection and processing unit 2 starting from the collected vibration and/or temperature data.

Advantageously, the color of a general signaling graphical element 15 of a zone 11 corresponds to the color of the detailed signaling graphical element 14 with the highest alert level status among all the detailed signaling graphical elements 14 relating to the components of the same zone.

In this way, starting from the graphical representation of the general map 10 it is possible to immediately identify one or more zones 11 within which at least one component 4 has a high alert level.

Then by selecting the specific general signaling graphical element 15, it is possible to move from the general map 10 to one or more sub-maps 12 until reaching the graphical representation of the machinery 13 and, then, the one or more components 4 the state of which is intended to be analyzed in detail. According to a preferred embodiment, shown in Figures 2 through 5, the graphical user interface 9 comprises at least one main window 16 within which is alternately displayed said graphical representation of a general map 10, said graphical representation of a sub-map 12 or said graphical representation of a piece of machinery 13.

In addition, again according to this preferred embodiment, the graphical user interface 9 comprises at least one secondary window 17 comprising at least one widget 18 configured to dynamically display the information relating to a graphical representation 10, 12, 13 displayed within the main window 16 and/or relating to a selected signaling graphical element 14, 15.

Conveniently, such widgets 18 are customizable by number and type of data displayed.

Conveniently, the layout and size of the windows 16, 17 are customizable.

In addition, according to one possible embodiment, the graphical user interface 9 comprises a plurality of push buttons for selecting different types of services.

Specifically, the graphical user interface 9 comprises a dedicated push button for each of the monitored services, wherein these services comprise: vibration monitoring, energy consumption monitoring, thermography, oil analysis, air analysis and anti-flooding monitoring.

Each of the push buttons is configured to be selected/deselected and the graphical user interface 9 is configured to vary the color of the general signaling graphical element 15 of each general map 10 and of each sub-map 12 depending on the push buttons selected and, therefore, on the relevant monitored services. Therefore, different colors of the general signaling graphical elements 15 correspond to different states relating to the different services selected by means of the push buttons.

By deselecting the push buttons one at a time, it is possible to figure out to which service a possible alarm report is linked.

Conveniently, the push buttons can also be configured to vary in color, wherein each color is selected according to the status of the relevant service.

It has in practice been ascertained that the described invention achieves the intended objects.

In particular, the fact is emphasized that the monitoring system according to the invention allows for rapid and simplified check of the status of all components of all machinery in one or more plants, even in the case of very complex plants and/or multiple plants distributed at multiple sites.

## Claims

1. Monitoring system (1) of machinery in industrial plants, particularly for predictive maintenance of machinery, comprising:
- at least one data collection and processing unit (2);
- a plurality of vibration and/or temperature sensors (3) installed at the point where the components (4) to be monitored of machinery (5) of at least one industrial plant (6) are located;
- wherein said sensors (3) are operationally connected to said data collection and processing unit (2) and are configured to collect vibration and/or temperature data relating to said components (4) and to send the collected data to said data collection and processing unit (2);
- wherein said data collection and processing unit (2) comprises a storage unit (7) of said collected data and is configured to process said collected data for the detection of abnormal vibration and/or temperature data;
- at least one control unit (8) operationally connected to said data collection and processing unit (2), comprising a graphical user interface (9) for the real-time display and monitoring of said collected and processed data;
**characterized by** the fact that said graphical user interface (9) comprises:
- at least one graphical representation of a general map (10) of said at least one plant (6), divided into a plurality of zones (11), each comprising at least one piece of machinery (5) to be monitored;
- if at least one of said zones (11) of the general map (10) comprises a plurality of machinery (5) to be monitored, at least one graphical representation of a sub-map (12) of said general map (10), relating to said zone (11), wherein said sub-map (12) is in turn divided into a plurality of zones (11), each comprising at least one piece of machinery (5) to be monitored;
- a plurality of graphical representations of machinery (13) to be monitored;
- for each of said graphical representations of the machinery (13), at least one detailed signaling graphical element (14) arranged at the point where at least one component (4) to be monitored is located, configured to be displayed in different colors corresponding to different states of said component (4); and
- for each of said zones (11) of the general map (10) and, if any, of the sub-map (12), at least one general signaling graphical element (15) configured to be displayed in different colors according to the colors of each detailed signaling graphical element (14) of each component (4) of machinery (5) present within said zone (11).

2. Monitoring system (1) according to claim 1, **characterized by** the fact that said graphical user interface (9) is configured to perform at least the following steps:
- to display said graphical representation of the general map (10), wherein the color of the general signaling graphical element (15) of each zone (11) is selected according to the status of each of the components (4) of the machinery (5) present within said zone (11);
- if one of the general signaling graphical elements (15) of a zone (11) of said general map (10) is selected, and if said zone (11) comprises a plurality of machinery (5) to be monitored, to display a graphical representation of a sub-map (12) relating to said zone (11), wherein the color of the general signaling graphical element (15) of each zone (11) is selected according to the status of each of the components (4) of the machinery (5) present within said zone (11);
- if one of the general signaling graphical elements (15) of a zone (11) of said sub-map (12) is selected, and if said zone (11) comprises a plurality of machinery (5) to be monitored, to display a graphical representation of an additional sub-map (12) relating to said zone (11), wherein the color of the general signaling graphical element (15) of each zone (11) is selected according to the status of each of the components (4) of the machinery (5) present within said zone (11);
- if one of the general signaling graphical elements (15) of a zone (11) of said general map (10) or of said sub-map (12) is selected, and if said zone (11) comprises only one piece of machinery (5) to be monitored, to display a graphical representation of said machinery (13) to be monitored, wherein the color of the detailed signaling graphical element (14) of each component (4) to be monitored is selected according to the status of said component (4).

3. Monitoring system (1) according to one or more of the preceding claims, **characterized by** the fact that if at least one of said zones (11) of the sub-map (12) comprises a plurality of machinery (5) to be monitored, said graphical user interface (9) comprises at least one graphical representation of an additional sub-map (12) relating to said zone (11), wherein said additional sub-map (12) is in turn divided into a plurality of zones (11), each comprising at least one piece of machinery (5) to be monitored.

4. Monitoring system (1) according to one or more of the preceding claims, **characterized by** the fact that said different states of each monitored component (4) correspond to respective alert levels, and by the fact that said different colors of each detailed signaling graphical element (14) of a component (4) correspond to relevant alert levels.

5. Monitoring system (1) according to one or more of the preceding claims, **characterized by** the fact that said color of a general signaling graphical element (15) of a zone (11) corresponds to the color of the detailed signaling graphical element (14) with the highest alert level status among all the detailed signaling graphical elements relating to the components (4) of the same zone (11).

6. Monitoring system (1) according to one or more of the preceding claims, **characterized by** the fact that said graphical user interface (9) comprises at least one main window (16) within which is alternately displayed said graphical representation of a general map (10), said graphical representation of a sub-map (12) or said graphical representation of a piece of machinery (13).

7. Monitoring system (1) according to one or more of the preceding claims, **characterized by** the fact that said graphical user interface (9) comprises at least one secondary window (17) comprising at least one widget (18) configured to dynamically display the information relating to a graphical representation displayed within said main window (16) and/or relating to a selected signaling graphical element (14, 15).

8. Monitoring system (1) according to one or more of the preceding claims, **characterized by** the fact that it comprises sensors (3) installed at the points where the components (4) are located and operationally connected to said data collection and processing unit (2), selected from at least one of the following types: vibration sensor, temperature sensor, acceleration sensor, velocity sensor, displacement sensor, absorption sensor to detect electrical issues, filter clogging sensor, flow rate/pressure sensor.

9. Monitoring system (1) according to one or more of the preceding claims, **characterized by** the fact that said sensors (3) collect said data synchronously with each other.

10. Monitoring system (1) according to one or more of the preceding claims, **characterized by** the fact that it comprises at least one wireless communication station operationally connected to said data collection and processing unit (2) and by the fact that said sensors (3) comprise a transmission unit of said wireless type data (WiFi, 4G) operationally connected to said wireless communication station.
